# EUROPÄISCHE PATENTSCHRIFT

(11) **EP 0 729 496 B1**
(45) Veröffentlichungstag und Bekanntmachung des Hinweises auf die Patenterteilung: **14.10.1998**
(21) Anmeldenummer: 95900715.4
(22) Anmeldetag: 11.11.1994
(51) Int. Cl.: C09K 3/14

(54) **WÄSSRIGES ANTISLIPMITTEL**
AQUEOUS ANTI-SLIP AGENT
AGENT ANTIGLISSEMENT AQUEUX

(30) Priorität: 20.11.1993 DE 4339642
(43) Veröffentlichungstag der Anmeldung: 04.09.1996
(73) Patentinhaber: Henkel Kommanditgesellschaft auf Aktien, 40191 Düsseldorf (DE)
(72) Erfinder: GOSSEN, Ralf, D-47239 Duisburg (DE); HERLFTERKAMP, Bernhard, D-46236 Bottrop (DE); BROICH, Ludwig, D-40589 Düsseldorf (DE); BUXHOFER, Horst, D-40699 Erkrath (DE); ONUSSEIT, Hermann, D-42781 Haan (DE)
(86) Internationale Anmeldenummer: EP9403744
(87) Internationale Veröffentlichungsnummer: WO9514748

(56) Entgegenhaltungen:
- DE-A- 1 943 732
- DE-A- 2 240 608
- DE-A- 3 335 522
- DE-A- 4 230 472
- DATABASE WPI Section Ch, Week 8328, Derwent Publications Ltd., London, GB; Class A81, AN 83-706022 & DD,A,200 089 (VEB LEUNA-WERK ULBRICHT) 16. März 1983
- DATABASE WPI Section Ch, Week 9424, Derwent Publications Ltd., London, GB; Class A82, AN 94-197345 & JP,A,6 136 304 (KOYO KAGAKU KK) 17. Mai 1994

## Beschreibung

Die vorliegende Erfindung betrifft ein wäßriges Antislipmittel sowie dessen Verwendung für nichtsaugende Gegenstände.

Antislipmittel sollen ein Verrutschen, d.h. eine unbeabsichtigte gleitende Verschiebung zweier Gegenstände zueinander verhindern, jedoch ihre Trennung voneinander ohne weiteres ermöglichen. Das wird in der Regel dadurch erreicht, daß das Antislipmittel Bewegungen in Gleitrichtung großen Widerstand entgegensetzt, Bewegungen senkrecht dazu, jedoch keinen oder einen so geringen Widerstand, daß die Oberflächen der getrennten Gegenstände nicht beschädigt werden. Rohstoff-Basis für diese Antislipmittel sind in der Regel natürliche oder synthetische makromolekulare Stoffe, wie sie auch für Klebstoffe verwendet werden. Ähnlich wie bei den Klebstoffen können auch die Antislipmittel frei von verdunstenden Lösungs- oder Dispergiermitteln aus der Schmelze auf einen zu sichernden Gegenstand aufgetragen werden (siehe z.B. DE-A-19 17 566). Dieses Verfahren erfordert spezielle Vorrichtungen zum Aufschmelzen und Applizieren des Antislipmittels. Üblicher ist es, die makromolekularen Stoffe in Form einer Lösung in organischen Lösungsmitteln oder in Form einer wäßrigen Dispersion aufzutragen.

Bei der Anwendung der Antislipmittel für wasseraufsaugende Gegenstände, wie z.B. Verpackungen aus Karton, Pappe oder Papier oder bei der Beschichtung von Teppichen basieren die Antislipmittel heute in der Regel auf wäßrigen Lösungen oder Dispersionen. So beschreibt die DE-C-19 43 731 die Verwendung von wäßrigen Lösungen des Kolloids Xanthan-Gum als Haftmittel für Verpackungsmittel. Die DE-C-12 62 897 schlägt die Verwendung von wäßrigen Dispersionen von Polymerisaten olefinisch ungesättigter Verbindungen vor, insbesondere von Polyvinylacetaten und dessen Copolymeren. Gemäß der DE-C-20 31 881 können auch wäßrige Dispersionen von Paraffinen und/oder Polyalkylenen verwendet werden. In der DD 156 612 wird ein Verfahren zur Rückenausrüstung von Teppichbodenmaterial beschrieben, das dem Teppichboden eine feste transparente nichtklebende und rutschfeste Appretur verleiht. Dazu wird eine niedrigviskose Mischung aus einem Copolymerisat-Latex des Butadiens mit Styrol und/oder Acrylnitril mit pulverförmigen Polyvinylchlorid mit einem Mischungsfeststoffanteil von 40 bis 55 % hergestellt, auf den Teppichrücken aufgetragen und anschließend getrocknet. Der Zusatz des Polyvinylchlorids zum Butadien-Copolymerisat verringert dessen sonst störende Klebrigkeit, ohne das gute Rutschfestigkeitsverhalten auf unterschiedlichen Fußbodenarten wie Holz, Steinholz und Kunststoff zu stören. Die Beschichtungsmischung zeigt sehr gute Adhäsionseigenschaften zu Natur- wie auch zu Synthesefasern.

Für nichtwasseraufsaugende Gegenstände werden in der Regel Antislipmittel auf der Basis einer organischen Lösung von Polymeren oder Harzen verwendet. So schlägt die JP-A-59172569 Lösungen von Ethylen-Vinylacetat-Copolymeren und einem hydrierten Glycidylester des Kolophonium (Ester Gum H) in Toluol zur Verwendung in Aerosol-Dosen vor. Andere herkömmliche Antislipmittel verwenden Chlorkohlenwasserstoffe wie Methylenchlorid als Lösungsmittel für Kolophonium oder synthetische Polymere wie Polybutadien.

Um eine gute Applizierbarkeit aus den Aerosoldosen zu gewährleisten, dürfen diese Lösungen eine bestimmte Viskosität (etwa 1000 mPa.s) nicht überschreiten, daher können nur Lösungen mit relativ niedrigem Feststoffgehalt eingesetzt werden, d.h. bei der Applikation werden erhebliche Mengen von organischen Lösungsmitteln freigesetzt. Aus arbeitshygienischen und ökologischen Gründen bestand also erheblicher Bedarf, Haftmittel bereitzustellen, die bei ihrer Anwendung vorzugsweise keine oder nur geringe Mengen an organischen Lösungsmitteln freisetzen, außerdem sollten diese geringeren Mengen an organischen Lösungsmitteln, falls technisch unvermeidbar, unter arbeitshygienischen und ökologischen Gesichtspunkten unbedenklich sein.

In der deutschen Patentanmeldung P 42 30 472.5 vom 14.09.1992 wird ein Antislipmittel für Gegenstände beschrieben, die nicht Wasser aufsaugen. Es enthält
a) ein Polymeres, insbesondere ein Polymerisat von olefinisch ungesättigten Verbindungen,
b) einen Alkohol, insbesondere einen einwertigen Alkohol mit 1 bis 4 C-Atomen,
c) ein Treibmittel, insbesondere ein Gemisch aus Propan und Butan und/oder Dimethylether und
d) wasserlösliche oder in Wasser dispergierbare Zusatzstoffe, insbesondere ein Schutzkolloid, einen Entschäumer und/oder ein Re-Emulgiermittel.

Außerdem wird in der DE 2 240 608 ein Verfahren zum Rutschfestmachen von Gegenständen beschrieben, wobei auf die Gegenstände ein Naturharz mit einem Gehalt von mehr als 20 % Diterpencarbonsäure als wäßrige Lösung in Essigester, Isopropanol oder Ethanol aufgebracht wird.

Die erfindungsgemäße Aufgabe besteht darin, Antislipmittel bereitzustellen,
- die diese Nachteile nicht haben, also eine unproblematische Verarbeitung auch auf nicht wasseraufsaugenden Gegenständen mit Kunststoffoberflächen ermöglichen, sowie zu einem hohen temperatur- und wasserlöslichen Antislipmittel führen,
- die als Lösungs- und/oder Dispergiermittel Wasser oder wässrige Lösungen von arbeitshygienisch und/oder ökologisch unbedenklichen organischen Lösungsmitteln enthalten, ohne die Handhabung oder die Gebrauchseigenschaften zu verschlechtern und
- die gegebenenfalls aus Aerosoldosen applizierbar sind.

Die erfindungsgemäße Lösung dieser Aufgabe ist den Patentansprüchen zu entnehmen. Sie besteht hauptsächlich in der wäßrigen Lösung bzw. Dispersion von
A) einem Kolophoniumharz und/oder seinem Derivat,
B) einem ein- oder mehrwertigen Alkohol und
C) einem Verflüssigungsmittel.

Das erfindungsgemäße wäßrige Antislipmittel für Gegenstände mit Kunststoffoberflächen enthält also
A) 10 bis 60 Gew.% mindestens eines Kolophoniumharzes und/oder eines Derivates davon,
B) 2 bis 20 Gew.% mindestens eines ein- oder mehrwertigen Alkohols,
C) 2 bis 20 Gew.% des wasserlöslichen oder in Wasser dispergierbaren Verflüssigungsmittels Alkali- bzw. Erdalkali-Alkylbenzolsulfonat mit bis zu 8 C-Atomen im Alkylrest,
D) 0 bis 35 Gew.% eines Treibmittels,
E) 0 bis 10 Gew.% mindestens eines wasserlöslichen Polymers der Gruppe: Gelatine, Alginate, Xanthan Gum, Gummi arabicum, Stärke, Stärkederivate, Dextrin, Celluloseether, Casein, Polyvinylpyrrolidon, Polyacrylsäure, Polyvinylmethylether, Polyurethan und Polyvinylacetat und
F) restliche Mengen an Wasser.

Bei dem Kolophoniumharz handelt es sich um glasartige amorphe Massen mit durchschnittlichen Molekulargewichten unter 2 000 g/Mol. Sie werden aus dem Rohharz von Koniferen erhalten. Sie bestehen überwiegend aus ungesättigten Carbonsäuren mit der Bruttoformel C₂₀H₃₀O₂ wie Abietinsäure und ihren Isomeren. Daneben können aber auch noch mehr oder weniger Neutralstoffe wie Fettsäureester, Terpenalkohole und Kohlenwasserstoffe enthalten sein. Vorzugsweise wird ein derivatisiertes Kollophoniumharz eingesetzt, z.B. ein hydriertes oder disproportioniertes Kollophoniumharz, wobei die Derivatisierung, vor allem der Erhöhung der Wasserlöslichkeit dient, z.B. Verseifung oder Addition von Maleinsäure. Brauchbare Kollophoniumharze und seine Derivate sind Balsam-, Tall- und Wurzel-Harz. Besonders geeignet sind wasserlösliche Balsamharz-Derivate mit einer Löslichkeit von mindestens 3 g in 100 g Wasser bei 25 °C. Vorzugsweise werden wasserlösliche Kolophonium-Derivate eingesetzt, insbesondere verseifte Derivate.

Die ein- oder mehrwertigen Alkohole dienen nicht nur hals Lösungsvermittler, sondern sie sind auch wesentlich für die Haftung des Antislipmittels auf der Kunststoffoberfläche. Sie sind daher vorzugsweise flüssig und verdampfen bei 25 °C aus dem Klebstoffsystem entsprechend den praktischen Anforderungen. Bevorzugt werden Alkohole mit einer Löslichkeit von mehr als 3 g in 100 g Wasser bei 25 °C eingesetzt. Die Alkohole können aliphatische oder cycloaliphatische, gesättigte oder ungesättigte Kohlenwasserstoffe sein mit gerader oder verzweigter Kette. Sie können auch noch weitere Heteroatome enthalten, z.B. 0 in Form einer Ether-Gruppe. Konkrete Beispiele sind Methanol, Ethanol, Propanol, Butanol, Benzylalkohol, Cyclohexanol, Di-, Tri- und Polyethylenglykol. Bevorzugt werden zwei- und mehrwertige Alkohole, insbesondere Ethan-1,2-diol, Propan-1,2-diol und/oder Propan-1,2,3-triol.

Als Verflüssigungsmittel eignen sich Alkali- oder Erdalkali Alkylbenzolsulfonate mit bis zu 8, insbesondere mit 1 bis 4 C-Atomen im Alkylrest, insbesondere das Natriumsalz von Propylbenzolsulfonat.

Aus Gründen des Umweltschutzes werden heute keine halogenierten Kohlenwasserstoffe mehr als Treibmittel für Aerosolverpackungen eingesetzt. Von den gängigen und an sich bekannten Treibgasen werden Propan, Butan oder deren Mischungen, gegebenenfalls mit Ethanol, insbesondere Dimethylether eingesetzt. Aber auch CO₂ ist möglich.

Bei den wasserlöslichen Polymeren handelt es sich um mindestens eines der folgenden natürlichen oder synthetischen Polymere: Gelatine, Alginate, Glutin, Xanthan Gum, Gummi arabicum, Stärke, Stärkederivate, Dextrin, Celluloseether, Casein, Polyvinylpyrrolidon, Polyvinylacrylsäure, Polyvinylmethylether, Polyvinylacetat, Polyurethan und Polyvinylalkohol. Als Stärkederivate kommen solche in Frage, wie sie durch Umsetzung von nativer oder abgebauter, beispielsweise oxidativ abgebauter Stärke zu erhalten sind. Bei diesen Stärkederivaten handelt es sich in der Regel um Umsetzungsprodukte mit beispielsweise Ethylenoxid, Propylenoxid, Acrylnitril, Chloressigsäure oder auch Epoxypropansulfonsäure. Der Substitutionsgrad soll relativ niedrig liegen, etwa zwischen 0,02 bis 0,1 DS. Als Dextrin kann das handelsübliche dünn-, mittel- oder dick-kochende Dextrin verwendet werden, das in bekannter Weise durch Abbau von Stärke gewonnen werden kann. Bevorzugt werden Stärke, Stärkederivate, Dextrin und Celluloseether eingesetzt.

Um bestimmte Verarbeitungseigenschaften der Antislipmittel günstig zu beeinflussen, können noch andere Zusatzstoffe wie handelsübliche Entschäumer, Alterungsschutzmittel und/oder Mittel zur Erleichterung der Re-Emulgierbarkeit des eingetrockneten Films zugesetzt werden. Beispiele für letztere sind Harnstoff, organische Amine wie z.B. Triethanolamin und/oder ähnliche Verbindungen.

Die Konzentration der einzelnen Komponenten in dem Antislipmittel beträgt vorzugsweise
35 bis 45 Gew.% an Komponente A),
5 bis 10 Gew.% an Komponente B),
5 bis 10 Gew.% an Komponente C),
15 bis 25 Gew.% an Komponente D) und
0,5 bis 5 Gew.% an Komponente E).

Der Rest ist Wasser. Unter besonderen Bedingungen kann eine Komponente auch außerhalb der bevorzugten Bereiche liegen, z.B. wenn
- durch Klimaeinfluß die Trocknungsgeschwindigkeit beschleunigt oder verzögert wird (Variation des Alkoholgehaltes)
- durch starke oder wenige Oberflächenstrukturen die Kontaktfläche verkleinert oder vergrößert wird (Variation des Polymergehaltes).
Zum Auftragen des Antislipmittels aus der Aerosol-Dose sollte die Viskosität ohne Treibgas 100 bis 3 000, insbesondere 500 bis 1 000 mPa·s betragen (Brookfield, 23 °C, Spindel 3, 20 U/Minute).

Der pH-Wert des Antislipmittels wird mit Alkali bzw. Ammoniak auf einen Wert zwischen 7 und 10, vorzugsweise 8,5 und 9,5 eingestellt. Vorzugsweise enthält das Antislipmittel keine halogenierten organischen Lösungsmittel.

Der Feststoffgehalt des Antislipmittels beträgt im allgemeinen 40 bis 60 Gew.%, insbesondere 50 bis 55 Gew.%. Er kann jedoch auch außerhalb dieses Bereiches liegen, wenn man z.B. bei niedrigeren Werten eine längere Verdunstungszeit in Kauf nimmt oder bei höheren Werten verkürzt sich die Verdunstungszeit.

Die Herstellung des Antislipmittels aus den einzelnen Komponenten ist einfach und bereitet dem Fachmann keine Schwierigkeiten, da sie in gewohnter Weise mit gewohnten Mitteln durchgeführt wird.

Das Antislipmittel wird ebenfalls auf bekannte Art und Weise auf die Gegenstände aufgetragen, also z.B. mittels Walzen, Düsen oder Pinsel, vorzugsweise jedoch-mit einem Treibmittel aus einer Aerosoldose aufgesprüht. Es ist wichtig, daß die Oberflächen trocken sind, bevor die Gegenstände aufeinander gestapelt werden.

Die erfindungsgemäßen Antislipmittel eignen sich sowohl zur Ausrüstung von wasseraufsaugenden Gegenständen, aber auch zur Antislipausrüstung von nichtwasseraufsaugenden Gegenständen aus Metallen oder Kunststoffen. Bei den Kunststoffen handelt es sich z.B. um Polystyrol, Polycarbonat, Polyvinylchlorid und Polyethylenterephthalat. Aber auch Polyethylen und Polypropylen können wirksam rutschfest ausgerüstet werden.

Es hat sich dabei überraschend gezeigt, daß die erfindungsgemäßen Antislipmittel eine Reihe von günstigen Verarbeitungseigenschaften aufweisen:
- rasches Auftrocknen des Antislipmittelfilms
- gute Redispergierbarkeit des Films nach dem Eintrocknen, daher kein Verstopfen der Sprühdüse
- gute Klebkraft auf nicht saugenden Substraten wie z.B. Säcken aus Polyethylen oder Polypropylen, trotzdem können die Verklebungen einfach und ohne Beschädigung der Substrate gelöst werden
- der Klebstoffilm ist transparent und hinterläßt beim Eintrocknen keine spröden, abbröckelnden Rückstände
- die Mischungen neigen nicht zur Koagulation oder zum Absitzen.

Obwohl die erfindungsgemäßen Mittel bevorzugt als Antislipmittel verwendet werden, ist diese Anwendungsform nur als ein Anwendungsbeispiel zu betrachten, andere Anwendungen, bei denen es ebenfalls auf "dosierte Klebkraft ankommt, gehören ebenfalls zum Umfang der Erfindung, z.B. die Anwendung beim Aufwickeln einer Bahn auf einer Hülse, wobei die Bahn bzw. die Hülse aus Kunststoff oder Papier bzw. Pappe besteht.

Die nachfolgenden Beispiele sollen die Erfindung näher erläutern.

### Beispiel 1 (in Gew.Teilen)

1) 42 % Resitherm CA-HE
2) 15 % Wasser
3) 10 % Kalilauge
   (50 %ig in Wasser)
4) 7 % Glycerin
5) 25 % Na-Cumolsulfonat
   (40 %ig in Wasser)
6) 1 % H₂O₂
   (35 %ig in Wasser)

Resitherm CA-HE ist ein Kolophoniumharz mit einer Säurezahl von ca. 160 und einer Verseifungszahl von ca. 170.

Die obigen Komponenten wurden in folgender Reihenfolge in üblichen Rührwerken gemischt: Zuerst wurden die Komponenten 1, 2 und 3 vorgelegt und auf ca. 85 °C erhitzt. Nach dem Abkühlen auf 40 bis 80 °C wurden dann die Komponenten 4 und 5 zugesetzt. Die Viskosität wurde mit Wasser auf den gewünschten Wert eingestellt. Schließlich wurde mit der Komponente 6 gebleicht. Die Viskosität betrug 1 800 mPas bei 25 °C, der pH-Wert 8,5. Der Feststoffgehalt war 65 %.

Der Wirkstoff (75 Gewichtsteile) wurde zusammen mit dem Treibmittel Dimethylether (25 Gewichtsteile) auf übliche Weise in Aerosoldosen abgefüllt.

In Abhängigkeit von der Auftragsmenge und den klimatischen Bedingungen trat nach 30 bis 90 s (20 °C, 60 % relative Luftfeuchtigkeit) sogar auf Polyethylen ein für die Weiterverarbeitung ausreichender Antirutscheffekt ein.
Der Schaum zerfiel sehr rasch.

### Beispiel 2

Analog zu Beispiel 1 wurde aus folgenden Komponenten ein Antislipmittel für Aerosoldosen hergestellt:
1) 46,0 Gew.-% modifiziertes Tallharz,
2) 18,75 Gew.-% Wasser,
3) 7 Gew.-% Natronlauge (50%ig in Wasser),
4) 9 Gew.-% Glyzerin
5) 9 Gew.-% Na-Cumolsulfonat (fest)
6) 0,25 Gew.-% Entschäumer
7) 10 Gew.-% Ethanol

Die Viskosität betrug 800 mPas bei 25 °C, der pH-Wert 9 und der Feststoffgehalt 67 %. 75 Gewichtsteile dieses Gemisches wurden mit 25 Gewichtsteilen Dimethylether auf übliche Weise in Aerosoldosen abgefüllt.
Es wurden praktisch die gleichen Ergebnisse erhalten wie in Beispiel 1.

## Patentansprüche

1. Wäßriges Antislipmittel für Gegenstände mit Kunststoffoberflächen, enthaltend
A) 10 bis 60 Gew.-% mindestens eines Kolophoniumharzes und/oder eines Derivates davon,
B) 2 bis 20 Gew.-% mindestens eines ein- oder mehrwertigen Alkohols,
C) 2 bis 20 Gew.-% des wasserlöslichen oder in Wasser dispergierbaren Verflüssigungsmittels Alkali- bzw. Erdalkali-Alkylbenzolsulfonat mit bis zu 8 C-Atomen im Alkylrest,
D) 0 bis 35 Gew.-% eines Treibmittels,
E) 0 bis 10 Gew.-% mindestens eines wasserlöslichen Polymers der Gruppe: Gelatine, Alginate, Xanthan Gum, Gummi arabicum, Stärke, Stärkederivate, Dextrin, Celluloseether, Casein, Poly-vinylpyrrolidon, Polyacrylsäure, Polyvinylmethylether, Polyurethan und Polyvinylacetat und
F) restliche Mengen an Wasser.

2. Antislipmittel nach Anspruch 1, gekennzeichnet durch das Verflüssigungsmittel Alkali/Erdalkali-Alkylbenzolsulfonat mit bis zu 4 C-Atomen im Alkylrest.

3. Antislipmittel nach Anspruch 1 oder 2, gekennzeichnet durch wasserlösliche Kolophoniumharz-Derivate.

4. Antislipmittel nach Anspruch 1 oder 3, gekennzeichnet durch die mehrwertigen Alkohole Ethan-1,2-diol, Propan, 1,2-Diol und/oder Propan-1,2,3-triol.

5. Antislipmittel nach mindestens einem der Ansprüche 1 bis 4, gekennzeichnet durch Dimethylether als Treibmittel.

6. Antislipmittel nach mindestens einem der Ansprüche 1 bis 5, gekennzeichnet durch ein wasserlösliches Polymer aus einem oder mehreren der folgenden Stoffe: Stärke, Stärkederivate, Dextrin, Polyurethan und Celluloseether.

7. Antislipmittel nach mindestens einem der Ansprüche 1 bis 6, gekennzeichnet durch folgenden Gehalt der Komponenten A) bis F), bezogen auf das fertige Antislipmittel:
35 bis 45 Gew.% an Komponente A),
5 bis 10 Gew.% an Komponente B),
5 bis 10 Gew.% an Komponente C),
15 bis 25 Gew.% an Komponente D) und
0,5 bis 5 Gew.% an Komponente E),
wobei der Rest Wasser ist.

8. Antislipmittel nach mindestens einem der Ansprüche 1 bis 7, gekennzeichnet durch einen pH-Wert von 7 bis 10.

9. Antislipmittel nach mindestens einem der Ansprüche 1 bis 8, gekennzeichnet durch eine Viskosität von 100 bis 3 000 mPa·s ohne Treibgas.

10. Verwendung des Antislipmittels nach mindestens einem der Ansprüche 1 bis 9 zur Rutschfestausrüstung von Kunststoffoberflächen aus Polystyrol, Polycarbonat, Polyvinylchlorid, Polyethylen, Polypropylen und Polyethylenterephthalat, wobei die Oberflächen erst nach der Trocknung des Antislipmittels in Kontakt gebracht werden.

## Claims

1. A water-containing antislip composition for articles with plastic surfaces containing
A) 10 to 60% by weight of at least one rosin and/or a derivative thereof,
B) 2 to 20% by weight of at least one monohydric or polyhydric alcohol,
C) 2 to 20% by weight of the water-soluble or water-dispersible liquefying agent alkali metal or alkaline earth metal alkyl benzenesulfonate containing up to 8 carbon atoms in the alkyl chain,
D) 0 to 35% by weight of a propellent,
E) 0 to 10% by weight of at least one water-soluble polymer from the group consisting of gelatine, alginates, xanthan gum, gum arabic, starch, starch derivatives, dextrin, cellulose ethers, casein, polyvinyl pyrrolidone, polyacrylic acid, polyvinyl methyl ether, polyurethane and polyvinyl acetate, and
F) residual amounts of water.

2. An antislip composition as claimed in claim 1, characterized by alkali metal/alkaline earth metal alkyl benzenesulfonate containing up to 4 carbon atoms in the alkyl chain as the liquefying agent.

3. An antislip composition as claimed in claim 1 or 2, characterized by water-soluble rosin derivatives.

4. An antislip composition as claimed in claim 1 or 3, characterized by the polyhydric alcohols ethane-1,2-diol, propane-1,2-diol and/or propane-1,2,3-triol.

5. An antislip composition as claimed in at least one of claims 1 to 4, characterized by dimethyl ether as the propellent.

6. An antislip composition as claimed in at least one of claims 1 to 5, characterized by a water-soluble polymer of one or more of the following substances: starch, starch derivatives, dextrin, polyurethane and cellulose ether.

7. An antislip composition as claimed in at least one of claims 1 to 6, characterized by the following contents of components A) to F), based on the final antislip composition:
35 to 45% by weight of component A),
5 to 10% by weight of component B),
5 to 10% by weight of component C),
15 to 25% by weight of component D) and
0.5 to 5% by weight of component E),
the rest being water.

8. An antislip composition as claimed in at least one of claims 1 to 7, characterized by a pH value of 7 to 10.

9. An antislip composition as claimed in at least one of claims 1 to 8, characterized by a viscosity of 100 to 3,000 mPa·s without a propellent gas.

10. The use of the antislip composition claimed in at least one of claims 1 to 9 for the antislip treatment of plastic surfaces of polystyrene, polycarbonate, polyvinyl chloride, polyethylene, polypropylene and polyethylene terephthalate, the surfaces only being brought into contact after drying of the antislip composition.

## Revendications

1. Agent antidérapant aqueux pour les objets à surfaces en matière synthétique, renfermant
A) 10 à 60 % en poids d'au moins une résine colophane et/ou d'un dérivé de celle-ci,
B) 2 à 20 % en poids d'au moins un alcool mono-ou polyvalent,
C) 2 à 20 % en poids de l'agent fluidifiant soluble ou dispersible dans l'eau, alkylbenzènesulfonate de métal alcalin ou alcalino-terreux, dont le radical alkyle comporte jusqu'à 8 atomes de C,
D) 0 à 35 % en poids d'un agent propulseur,
E) 0 à 10 % d'au moins un polymère soluble dans l'eau appartenant au groupe des composés suivants: gélatine, alginates, gomme de xanthane, gomme arabique, amidon, dérivés d'amidon, dextrine, éther cellulosique, caséine, polyvinylpyrrolidone, acide polyacrylique, éther de polyvinylméthyle, polyuréthane et acétate de polyvinyle, et
F) des quantités d'eau pour le reste.

2. Agent antidérapant selon la revendication 1, caractérisé par l'agent fluidifiant alkylbenzènesulfonate de métal alcalin/alcalino-terreux, dont le radical alkyle comporte jusqu'à 4 atomes de C.

3. Agent antidérapant selon la revendication 1 ou 2, caractérisé par les dérivés de résine de colophane solubles dans l'eau.

4. Agent antidérapant selon la revendication 1 ou 3, caractérisé par les alcool polyvalents éthane-1,2-diol, propane-1,2-diol et/ou propane-1,2,3-triol.

5. Agent antidérapant selon au moins une des revendications 1 à 4, caractérisé par l'éther diméthylique comme agent propulseur.

6. Agent antidérapant selon au moins une des revendications 1 à 5, caractérisé par un polymère soluble dans l'eau constitué d'une ou de plusieurs des substances suivantes: amidon, dérivés d'amidon, dextrine, polyuréthane et éther cellulosique.

7. Agent antidérapant selon au moins une des revendications 1 à 6, caractérisé par le contenu suivant des composants A) à F), par rapport à l'agent antidérapant prêt à l'emploi:
35 à 45 % en poids du composant A)
5 à 10 % en poids du composant B),
5 à 10 % en poids du composant C),
15 à 25 % en poids du composant D) et
0,5 à 5 % en poids du composant E),
le reste étant constitué d'eau.

8. Agent antidérapant selon au moins une des revendications 1 à 7, caractérisé par un pH de 7 à 10.

9. Agent antidérapant selon au moins une des revendications 1 à 8, caractérisé par une viscosité de 100 à 3000 mPa.s, sans gaz propulseur.

10. Utilisation de l'agent antidérapant selon au moins une des revendications 1 à 9, pour l'apprêtage antidérapant des surfaces en matière synthétique de polystyrène, polycarbonate, chlorure de polyvinyle, polyéthylène, polypropylène et polyéthylènetéréphtalate, les surfaces n'étant mises en contact qu'après séchage de l'agent antidérapant.
